# EUROPÄISCHE PATENTSCHRIFT

(11) **EP 2 531 752 B1**
(45) Veröffentlichungstag und Bekanntmachung des Hinweises auf die Patenterteilung: **16.08.2017**
(21) Anmeldenummer: 11701461.3
(22) Anmeldetag: 27.01.2011
(51) Int. Cl.: F16K 7/06, F16K 37/00

(54) **SCHLAUCHQUETSCHVENTIL**
CONSTRICTION-HOSE VALVE
ROBINET À MANCHON DÉFORMABLE

(30) Priorität: 05.02.2010 DE 102010007018
(43) Veröffentlichungstag der Anmeldung: 12.12.2012
(73) Patentinhaber: Sartorius Stedim Biotech GmbH, 37079 Göttingen (DE)
(72) Erfinder: MATTHIESEN, Rolf, 37083 Göttingen (DE)
(86) Internationale Anmeldenummer: PCT/EP2011/000368
(87) Internationale Veröffentlichungsnummer: WO 2011/095299

(56) Entgegenhaltungen:
- DE-A1- 2 257 161
- US-A- 5 197 708

## Beschreibung

Die Erfindung betrifft ein manuelles Schlauchquetschventil mit Stellungsrückmelder. Ein derartiges Ventil ist insbesondere für Schläuche zum Einmalgebrauch, beispielsweise in der Lebensmittel- und Getränkeindustrie, der Biotechnologie, der chemischen Industrie oder der Pharmaindustrie einsetzbar.

Schlauchquetschventile sind in vielen verschiedenen Varianten bekannt. Für Schlauch-Leitungen im Bereich der Labortechnologie, der Lebensmittel- und Getränkeindustrie, der chemischen Industrie, der Biotechnologie oder der pharmazeutischen Produktforschung bzw. -herstellung werden vermehrt Einwegschläuche verwendet, um Reinigungskosten zu sparen oder auch um Sterilität zu gewährleisten. Für derartige Schläuche ist ein leicht handhabbares und sicher arbeitendes Ventil nötig.

Aus der DE 22 57 161 A1 ist ein mehrteiliges Quetschventil bekannt, das neben Reedschaltern als Näherungssensoren und einem Klemmbolzen, ein Näherungselement aufweist. Bei dem Näherungselement handelt es sich um einen Permanentmagneten, der an einer Kolbenstange befestigt ist und exakt so angeordnet wird, dass er auf die Reedschalter ausgerichtet ist, um diese zu öffnen oder zu schließen.

Aus der AT 376 025 B ist ein Schlauchquetschventil bekannt, welches mit Hilfe eines elektromagnetisch betätigbaren Klemmbolzens den, sich in einer Längsnut befindlichen, Schlauch verschließt. Nachteilig dabei ist, dass es nicht genau ersichtlich ist, wann der Schlauchdurchfluss gesperrt ist. Somit ist es nötig den Schlauch sehr stark zu quetschen, was zu Verletzungen des Schlauches oder auch des Ventils führen kann oder bei nicht komplettem Verschließen zu mangelnder Sicherheit im Prozessablauf führt.

Aus der DE10 2007 002 765 B3 ist ein Quetschventil bekannt, welches elektrisch betätigbare Positionserfassungsmittel aufweist, wodurch die Betriebsposition von Beaufschlagungsmitteln erfasst werden kann. Hierbei erweist sich als nachteilig, dass dieses Ventil nicht für Einwegschläuche bzw. Anlagen zum Einmalgebrauch geeignet ist. Der Schlauch, der zum Schließen gequetscht wird, ist in das Ventil eingearbeitet und kann nur im Rahmen von Wartungsarbeiten gewechselt werden. Damit ist das Ventil produktberührt und aufgrund der hohen Kosten für den Einmalgebrauch nicht geeignet. Zudem ist dieses Quetschventil kompliziert aufgebaut und besteht aus vielen Elementen.

Der Erfindung liegt daher die Aufgabe zugrunde, ein Schlauchquetschventil mit Näherungssensor zu entwickeln, welches einfach handhabbar ist und zugleich eine hohe Prozesssicherheit gewährleistet.

Die Aufgabe wird durch eine Vorrichtung gemäß Anspruch 1 gelöst. Das erfindungsgemäße Schlauchquetschventil weist im wesentlichen 2 Teile auf. Zum einen einen Ventilkörper, welcher einen Näherungssensor enthält und zum anderen mindestens einen bewegbaren Klemmbolzen, der mindestens ein Näherungselement aufweist. Der Ventilkörper weist eine Schlauchführung auf, in welche ein Schlauch einlegbar oder schiebbar ist. Durch eine Öffnung im Ventilkörper gelangt der Klemmbolzen zu dem Schlauch und verschließt diesen durch Quetschung. Ein am Ventilkörper befindlicher Näherungssensor dokumentiert die Entfernung des Näherungselementes. Steht die Scheibe in einer Entfernung zum Sensor, die seiner Schaltflanke entspricht, wird ein Signal ausgelöst und die Stellung rückgemeldet. Somit lässt sich ein reduzierter Durchfluss ebenso regeln wie eine kontrollierte Schließung, die den Schlauch komplett verschließt aber nicht beschädigt.

Gemäß einer bevorzugten Ausführungsform der Erfindung ist der Klemmbolzen manuell betätigbar. Durch die Stellungsrückmeldung des Schlauchquetschventils ist eine handbetätigte Schließung bzw. Öffnung problemlos und sicher möglich.

Eine weitere Möglichkeit besteht darin, die manuelle Betätigung durch mechanische oder elektrische Einrichtungen zu unterstützen. Durch eine Leuchtdiode am Sensor kann zusätzlich ein optisches Signal gegeben werden, um beispielsweise eine Schließung oder Öffnung anzuzeigen.

Nach einer weiteren bevorzugten Ausführungsform der Erfindung ist der Klemmbolzen mittles Hydraulik oder Pneumatik bewegbar.

Gemäß einer weiteren besonders bevorzugten Ausführungsform der Erfindung weist der Klemmbolzen des Schlauchquetschventils ein Gewinde auf und der Ventilkörper ein dazu passendes Gegengewinde. Durch Drehung des Klemmbolzens ist dieser somit in bzw. gegen die Richtung des Schlauches bewegbar und das Näherungselement bewegt sich in oder gegen die Richtung des Näherungssensors.

In einer weiteren vorteilhaften Ausgestaltung der Erfindung ist das Näherungselement eine plane Metall-Scheibe. Der Rest des Schlauchquetschventils kann aus einem oder verschiedenen beliebigen Materialien sein.

Die Metall-Scheibe ist bei einer weiteren besonders vorteilhaften Ausführungsform der Erfindung, bei welcher der Näherungssensor magnetisch-induktiv arbeitet, nötig. Dieses Prinzip eignet sich zuverlässig für eine Dokumentation des Status.

Nach einer weiteren bevorzugten Ausführungsform der Erfindung ist mindestens ein Befestigungselement am Ventilkörper angebracht. Hierbei sind beispielsweise Bohrung(en) mit Gewinde oder Arretierungselement(en), ein oder mehrere Klemmverschlüsse, ein oder mehrere Vorsprünge mit Gewinde(n) etc. möglich. Somit ist der Ventilkörper an einer Stelle fest montierbar und hängt nicht lose am Schlauch. Das erfindungsgemäße Schlauchquetschventil ist einhändig bedienbar und muss bei einem Schlauchwechsel nicht zwischengelagert werden. Zusätzlich stellt das Schlauchquetschventil somit eine Führung für den Aufbau der Schlauchleitungen dar.

Gemäß einer weiteren besonders bevorzugten Ausführungsform der Erfindung ist das Näherungselement verstellbar, beispielsweise durch Kontermuttern, die das Näherungselement fest an einer Stelle halten, durch welche aber ebenso eine beliebige Entfernung vom Sensor einstellbar ist. Die genaue Position des Näherungselementes hängt von Durchmesser und Material des Schlauches ab und wird während der Montage ermittelt. Das Näherungselement ist so fixierbar, dass es im Moment des vollständigen Schließens in einer Entfernung zu dem Näherungssensor steht, in der dieser ein Signal gibt. Die dem Ventilkörper zugewandte Kontermutter, oder eine zusätzliche Mutter, stellt für die Welle auch einen mechanischen Anschlag dar, wodurch ein Überdrehen des Klemmbolzens verhinderbar ist. Dadurch wird der Schlauch vor Beschädigung oder Zerstörung geschützt. Dies erhöht die Prozess- und Arbeitssicherheit. Ebenso sind anstatt (Konter-)Muttern und/oder bei nicht Verwendung von Gewinden auch andere Befestigungsvorrichtungen möglich.

Nach einer bevorzugten Verwendung der Erfindung ist das Schlauchquetschventil zur Regulierung des inneren Querschnitts eines Schlauches vorgesehen.

Nach einer besonders bevorzugten Verwendung der Erfindung wird der Schlauch durch das Schlauchquetschventil verschlossen.

Nach einer weiteren bevorzugten Ausführungsform der Erfindung ist das Näherungselement am Ventilkörper angebracht und der Näherungssensor am Klemmbolzen.

Die Figuren 1 bis 4 zeigen unterschiedliche Ausführungsformen des Schlauchquetschventils. In den Zeichnungen zeigen:
- Figur 1:: eine räumliche Darstellung eines Schlauchquetschventils mit Ventilkörper und Klemmbolzen,
- Figur 2:: eine Seitenansicht eines Schlauchquetschventils mit Ventilkörper und Klemmbolzen,
- Figur 3:: eine Seitenansicht eines Klemmbolzens für ein Schlauchquetschventil und
- Figur 4:: eine räumliche Darstellung eines Ventilkörpers für ein Schlauchquetschventil.

### Beschreibung der Ausführungsbeispiele

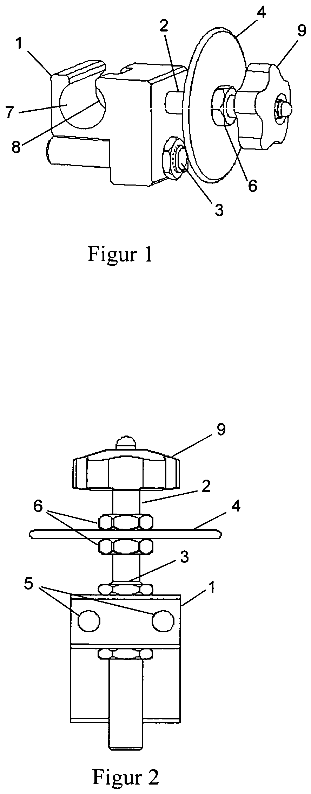

Gemäß Figur 1 und Figur 2 besteht ein Schlauchquetschventil aus einem Ventilkörper **1** und einem Klemmbolzen **2.** Der Klemmbolzen **2** steckt in dem Ventilkörper **1.** Ein am Klemmbolzen **2** befindliches Näherungselement **4** lässt den Näherungssensor **3** die Stellung des Klemmbolzens **3** dokumentieren und insofern eine Rückmeldung zu. Durch Kontermuttern **6** oder auch andere Befestigungseinrichtungen ist das Näherungselement **4** auf unterschiedliche Schlauchwandstärken und Schlauchgrößen einstellbar, um eine vollständige und verletzungsfreie Schließung zu gewährleisten.

Figur 1 zeigt ein perspektivisches Ausführungsbeispiel des Schlauchquetschventil mit einer im wesentlichen kreisrunden Schlauchführung **7** im Ventilkörper **1,** in welche ein Schlauch einlegbar ist. Durch eine an dem Schlauchende zugewandte Seite des Klemmbolzens **2** befindliche Halbkugel **8** wird der Schlauch bei Verschließen gequetscht und hält sich danach selbst durch seine Ausdehnung. Ein am anderen Ende befindlicher Griff **9** vereinfacht die manuelle Verstellung des Schlauchquetschventils. Durch eine Ausführung des Näherungselementes **4** als im wesentlichen plane Scheibe ist eine zuverlässige Zustandsrückmeldung bei Drehung sowie Verschiebung des Klemmbolzens **2** möglich.

Figur 2 zeigt eine Seitenansicht auf ein Ausführungsbeispiel des Schlauchquetschventils. Durch den Griff **9,** der beispielsweise als Handrad ausgeführt sein kann, ist der Klemmbolzen **2** bei einer Gewindeausführung ein- und ausdrehbar. Bei einem bestimmten Abstandes des Näherungselementes **4** vom Näherungssensor **3** gibt der Näherungssensor **3** ein Signal, welches an eine Anlagensteuerung weitergegeben wird. Zusätzlich kann eine Leuchtdiode am Näherungssensor **3** ein optisches Signal geben. Die dem Ventilkörper **1** zugewandte Kontermutter **6** kann zusätzlich den Schließprozess stoppen, und ist somit ein redundantes Mittel zur Erhaltung der Versehrtheit des Schlauches, da eine Überquetschung verhinderbar ist. Durch Befestigungselemente **5,** wie beispielsweise Gewindelöcher oder -Vorsprünge, ist der Ventilkörper **1** fest anbring- bzw. verschraubbar. Dadurch lässt sich der Medienfluss mit dem Schlauchquetschventil sehr bequem und sicher regeln. Außerdem kann das Schlauchquetschventil beim Austausch von Schläuchen nicht verloren gehen. Als zusätzliche Funktion stellt das Schlauchquetschventil hierdurch ebenso eine Führung für einen Aufbau von Schlauchleitungen dar.

In Anlagen zum Einmalgebrauch sind die Schläuche nicht Teil eines Schlauchquetschventils, sondern werden nach jeder Charge entsorgt. Nur das Ventil bleibt zurück und wird für die nächste Charge mit einem neuen Schlauch bestückt. Befestigungselemente **5** sind somit ein nützliches Hilfsmittel für derartige Anlagen.

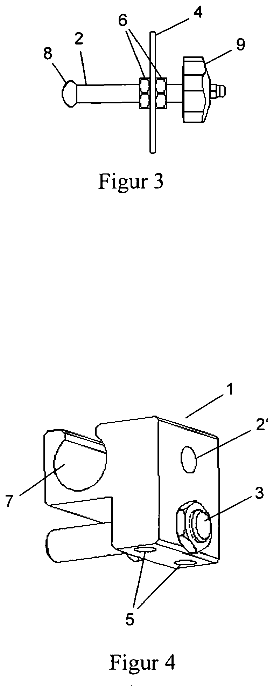

Figur 3 zeigt eine Seitenansicht auf ein Ausführungsbeispiel eines Klemmbolzens **2** für ein Schlauchquetschventil. Der Griff **9** erleichtert die manuelle Verstellung. Durch die halbkreisförmige Ausgestaltung der Halbkugel **8** ist eine zuverlässige Quetschung und somit Verschließung eines Schlauches möglich. Kontermuttern **6** halten einerseits das Näherungselement **4** in Position und bieten andererseits einen Quetschschutz für den Schlauch, indem sie einen Anschlag und somit eine mechanische Grenze für den Klemmbolzen **2** darstellen.

Figur 4 zeigt eine räumliche Darstellung eines Ausführungsbeispiels eines Ventilkörpers **1** für ein Schlauchquetschventil. Hierbei ist die Klemmbolzenführung **2'** dargestellt. Diese ist beispielsweise als Gegengewinde ausführbar. Die Befestigungselemente **5** sind als Gewindebohrungen ausgeführt. Eine hohlzylinderförmige Schlauchführung **7** kommt den Ausdehnungseigenschaften des Schlauches bei Quetschung mit einer Halbkugel **8** entgegen. Ein kompletter Verschluss des Schlauches ist somit sicherstellbar und durch den Näherungssensor **3** dokumentierbar.

## Patentansprüche

1. Schlauchquetschventil aufweisend einen Ventilkörper (1) und mindestens einen bewegbaren Klemmbolzen (2), wobei der Ventilkörper (1) einen Näherungssensor (3) und der Klemmbolzen (2) mindestens ein Näherungselement (4) aufweist, wobei das Näherungselement (4) eine Scheibe ist, die in einer Entfernung zum Sensor, die seiner Schaltflanke entspricht, ein Signal auslöst und zur Regelung des Durchfluss die Stellung rückmeldet.

2. Schlauchquetschventil nach Anspruch 1, wobei der Klemmbolzen (2) manuell betätigbar ist.

3. Schlauchquetschventil nach Anspruch 1 oder 2, wobei der Klemmbolzen (2) mittels Hydraulik oder Pneumatik bewegbar ist.

4. Schlauchquetschventil nach einem der vorhergehenden Ansprüche, wobei der Klemmbolzen (2) ein Gewinde aufweist und der Ventilkörper (1) eine Klemmbolzenführung (2').

5. Schlauchquetschventil nach einem der vorhergehenden Ansprüche, wobei das Näherungselement (4) eine Metall-Scheibe ist.

6. Schlauchquetschventil nach einem der vorhergehenden Ansprüche, wobei der Näherungssensor (3) magnetisch- induktiv arbeitet.

7. Schlauchquetschventil nach einem der vorhergehenden Ansprüche, wobei mindestens ein Befestigungselement (5) am Ventilkörper (1) angebracht ist.

8. Schlauchquetschventil nach einem der vorhergehenden Ansprüche, wobei das Näherungselement (4) verstellbar ist.

9. Schlauchquetschventil nach einem der vorhergehenden Ansprüche, wobei das Näherungselement (4) durch Kontermuttern (6) am Gewinde des Klemmbolzens (2) justierbar ist.

10. Verwendung eines Schlauchquetschventils nach einem der vorhergehenden Ansprüche zur Regulierung des inneren Querschnitts eines Schlauches.

11. Verwendung eines Schlauchquetschventils nach Anspruch 10, wobei der Schlauch durch das Schlauchquetschventil verschlossen wird.

## Claims

1. Constriction-hose valve comprising a valve body (1) and at least one movable clamping bolt (2), the valve body (1) having an approximation sensor (3) and the clamping bolt having at least one approximation element (4), wherein the approximation element (4) is a disk that triggers in a distance to the sensor that corresponds to its control flank a signal and reports the position for regulation of the flow.

2. Constriction-hose valve according to claim 1, wherein the clamping bolt (2) is manually actuable.

3. Constriction-hose valve according to claim 1 or 2, wherein the clamping bolt (2) is movable by hydraulics or pneumatics.

4. Constriction-hose valve according to one of the preceding claims, wherein the clamping bolt (2) has a thread and the valve body (1) a clamping bolt guide (2').

5. Constriction-hose valve according to one of the preceding claims, wherein the approximation element (4) is a metal disk.

6. Constriction-hose valve according to one of the preceding claims, wherein the approximation sensor (3) operates in a magnetically inductive manner.

7. Constriction-hose valve according to one of the preceding claims, wherein at least one fastening element (5) is mounted on the valve body (1).

8. Constriction-hose valve according to one of the preceding claims, wherein the approximation element (4) is adjustable.

9. Constriction-hose valve according to one of the preceding claims, wherein the approximation element (4) is adjustable by means of locknuts (6) on the thread of the clamping bolt (2).

10. Use of a constriction-hose valve according to one of the preceding claims for regulating the inner cross section of a tube.

11. Use of constriction-hose valve according to claim 10, wherein the tube is closed by the tube constriction-hose valve.

## Revendications

1. Robinet à manchon déformable présentant un corps de robinet (1) et au moins un boulon de serrage mobile (2), dans lequel le corps de robinet (1) présente un capteur de proximité (3) et le boulon de serrage (2) au moins un élément de proximité (4), dans lequel l'élément de proximité (4) est un disque qui, lors d'un éloignement vers le capteur, qui correspond à son flanc de commutation, déclenche un signal et communique la position pour le réglage du débit.

2. Robinet à manchon déformable selon la revendication 1, dans lequel le boulon de serrage (2) peut être commandé manuellement.

3. Robinet à manchon déformable selon la revendication 1 ou 2, dans lequel le boulon de serrage (2) peut être déplacé par voie hydraulique ou pneumatique.

4. Robinet à manchon déformable selon l'une quelconque des revendications précédentes, dans lequel le boulon de serrage (2) présente un filet et le corps de robinet (1) un guide de boulon de serrage (2').

5. Robinet à manchon déformable selon l'une quelconque des revendications précédentes, dans lequel l'élément de proximité (4) est un disque métallique.

6. Robinet à manchon déformable selon l'une quelconque des revendications précédentes, dans lequel le capteur de proximité (3) opère par induction magnétique.

7. Robinet à manchon déformable selon l'une quelconque des revendications précédentes, dans lequel au moins un élément de fixation (5) est monté sur le corps de robinet (1).

8. Robinet à manchon déformable selon l'une quelconque des revendications précédentes, dans lequel l'élément de proximité (4) peut être réglé.

9. Robinet à manchon déformable selon l'une quelconque des revendications précédentes, dans lequel l'élément de proximité (4) peut être adapté par des contre-écrous (6) au filet du boulon de serrage (2).

10. Utilisation d'un robinet à manchon déformable selon l'une quelconque des revendications précédentes pour réguler la section transversale interne d'un tuyau.

11. Utilisation d'un robinet à manchon déformable selon la revendication 10, dans lequel le tuyau est fermé par le robinet à manchon déformable.
